# EUROPÄISCHE PATENTANMELDUNG

(11) **EP 4 009 207 A1**
(43) Veröffentlichungstag der Anmeldung: **08.06.2022**
(21) Anmeldenummer: 20212268.5
(22) Anmeldetag: 07.12.2020
(51) Int. Cl.: G06F 21/44, H04W 12/08, G06F 21/62, H04L 29/06, H04L 9/32

(54) **ZUGRIFFSSTEUERUNG AUF EIN GERÄT ANHAND EINES INDIVIDUELLEN GERÄTEMERKMALS**

(71) Anmelder: Siemens Aktiengesellschaft, 80333 München (DE)
(72) Erfinder: Jetzfellner, Thomas, 85609 Aschheim (DE); Morra, Carlos, 81541 München (DE)

(57) **Zusammenfassung**

Die Erfindung betrifft eine Vorrichtung (100) zur Zugriffssteuerung auf ein Gerät, umfassend eine Schnittstelle (101), die derart eingerichtet ist, die Vorrichtung mit einer Netzwerkapplikation zu koppeln, um Daten mit der Netzwerkapplikation auszutauschen und einen in der Netzwerkapplikation gespeicherten gerätespezifischen Referenzwert einzulesen, ein Erfassungsmodul (102), das derart eingerichtet ist, ein individuelles Merkmal (PM) des Geräts zu erfassen, wobei das individuelle Merkmal des Geräts messbare, physikalische Geräteeigenschaften umfasst, und daraus einen Identifikator (ID) abzuleiten, ein Prüfmodul (103), das derart eingerichtet ist, den Identifikator anhand des gerätespezifischen Referenzwerts zu prüfen und ein Prüfergebnis auszugeben, und ein Steuermodul (104), das derart eingerichtet ist, einen Zugriff auf das Gerät in Abhängigkeit des Prüfergebnisses zu autorisieren.

## Beschreibung

Die Erfindung betrifft eine Vorrichtung und ein Verfahren zur Zugriffssteuerung auf ein Gerät, sowie ein Computerprogrammprodukt.

Zur Wartung oder Aktualisierung eines Geräts wird typischerweise ein physikalischer Zugriff auf das Gerät benötigt. Dazu werden insbesondere Informationen über das Gerät, wie z.B. Zustandsdaten und/oder Identifikationsdaten, benötigt. Außerdem soll der Zugriff auf das Gerät und/oder auf Daten des Geräts sicherheitsgeschützt erfolgen, um beispielsweise vertrauliche Gerätedaten und/oder das Gerät selbst vor Manipulation zu schützen. Es ist bekannt, ein Gerät über eine Identifikationsnummer zu identifizieren. Der Zugriff auf ein Gerät wird typischerweise durch Authentisierungsmechanismen geschützt, wie z.B. eine Passwortabfrage. Solche Mechanismen können aber leicht manipuliert und/oder umgangen werden.

Es ist daher eine Aufgabe der Erfindung, den Zugriff auf ein Gerät sicherer zu gestalten.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung eine Vorrichtung zur Zugriffssteuerung auf ein Gerät, umfassend:
- eine Schnittstelle, die derart eingerichtet ist, die Vorrichtung mit einer Netzwerkapplikation zu koppeln, um Daten mit der Netzwerkapplikation auszutauschen und einen in der Netzwerkapplikation gespeicherten gerätespezifischen Referenzwert einzulesen,
- ein Erfassungsmodul, das derart eingerichtet ist, ein individuelles Merkmal des Geräts zu erfassen, wobei das individuelle Merkmal des Geräts messbare, physikalische Geräteeigenschaften umfasst, und daraus einen Identifikator abzuleiten,
- ein Prüfmodul, das derart eingerichtet ist, den Identifikator anhand des gerätespezifischen Referenzwerts zu prüfen und ein Prüfergebnis auszugeben,
   und
- ein Steuermodul, das derart eingerichtet ist, einen Zugriff auf das Gerät in Abhängigkeit des Prüfergebnisses zu autorisieren.

Gemäß einem zweiten Aspekt betrifft die Erfindung ein Verfahren zur Zugriffssteuerung auf ein Gerät, umfassend die Verfahrensschritte:
- Einlesen eines in einer Netzwerkapplikation gespeicherten gerätespezifischen Referenzwerts,
- Erfassen eines individuellen Merkmals des Geräts,
- Ableiten eines Identifikators aus dem individuellen Merkmal, wobei das individuelle Merkmal des Geräts messbare, physikalische Geräteeigenschaften umfasst,
- Prüfen des Identifikators anhand des eingelesenen gerätespezifischen Referenzwerts,
- Ausgeben des Prüfergebnisses,
   und
- Autorisieren eines Zugriffes auf das Gerät in Abhängigkeit des Prüfergebnisses.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt. Beispielsweise ist unter "rechnergestützt" auch "computerimplementiert" zu verstehen. "Computerimplementiert" bedeutet beispielsweise, dass das Verfahren bzw. dessen Verfahrensschritte durch einen Prozessor oder durch mehrere Prozessoren ausgeführt wird.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Speichereinheit können Daten beispielsweise rechnergestützt und/oder automatisiert gespeichert, abgerufen oder bereitgestellt werden.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden.

Unter "sicherheitsgeschützt" oder "kryptographisch geschützt" kann im Zusammenhang mit der Erfindung beispielsweise ein Schutz verstanden werden, der insbesondere durch ein kryptographisches Verfahren realisiert wird. Beispielsweise kann dies durch eine Nutzung des verteilten Datenbanksystems (oder der Netzwerkapplikation) für das Bereitstellen oder Übertragen oder Senden von entsprechenden Daten/Transaktionen realisiert werden. Dies wird vorzugsweise durch eine Kombination von verschiedenen (kryptographischen) Prüfsummen erreicht, indem diese insbesondere synergetisch zusammenwirken, um beispielsweise die Sicherheit bzw. die kryptographische Sicherheit für die Daten der Transaktionen zu verbessern. Mit anderen Worten kann insbesondere unter "sicherheitsgeschützt" im Zusammenhang mit der Erfindung auch "kryptographisch geschützt" und/oder "manipulationsgeschützt" verstanden werden, wobei "manipulationsgeschützt" auch als "integritätsgeschützt" bezeichnet werden kann.

Unter "Einfügen/Speichern in eine Netzwerkapplikation" oder in eine Datenbank, insbesondere in eine verteilte Datenbank, und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems (oder einer Netzwerkapplikation) übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems (oder der Netzwerkapplikation) verkettet. Hierzu werden die entsprechenden Transaktionen beispielsweise in einem neuen Datenblock gespeichert.

Unter "Transaktion" bzw. "Transaktionen" können im Zusammenhang mit der Erfindung beispielsweise ein Smart-Contract, eine Datenstruktur oder ein Transaktionsdatensatz verstanden werden, der insbesondere jeweils eine der Transaktionen oder mehrere Transaktionen umfasst.

Insbesondere ist unter "Speichern von Transaktionen in Datenblöcken", "Speichern von Transaktionen" und dergleichen ein direktes Speichern oder indirektes Speichern zu verstehen.

Unter einem direkten Speichern kann dabei beispielsweise verstanden werden, dass der entsprechende Datenblock (des verteilten Datenbanksystems/der Netzwerkapplikation) oder die entsprechende Transaktion (des verteilten Datenbanksystems/der Netzwerkapplikation) die jeweiligen Daten umfasst. Unter einem indirekten Speichern kann dabei beispielsweise verstanden werden, dass der entsprechende Datenblock oder die entsprechende Transaktion eine Prüfsumme und optional einen Zusatzdatensatz (z. B. einen Verweis oder eine Angabe zu einem Speicherort) für entsprechende Daten umfasst und die entsprechenden Daten somit nicht direkt in dem Datenblock (oder der Transaktion) gespeichert sind (also stattdessen nur eine Prüfsumme für diese Daten).

Unter einem "Programmcode" oder "Programmbefehl", wie z. B. ein Smart-Contract oder auch Chain-Code genannt, kann im Zusammenhang mit der Erfindung beispielsweise ein Programmbefehl oder mehrere Programmbefehle verstanden werden, die insbesondere in einer oder mehreren Transaktionen gespeichert sind. Der Programmcode ist insbesondere ausführbar und wird beispielsweise durch das verteilte Datenbanksystem oder durch die Netzwerkapplikation ausgeführt. Der Programmcode wird vorzugsweise durch die Infrastruktur des verteilten Datenbanksystems oder der Netzwerkapplikation ausgeführt.

Unter einer "Netzwerk-Applikation", kann im Zusammenhang mit der Erfindung beispielsweise eine dezentral verteilte Datenbank, ein verteiltes Datenbanksystem, eine verteilte Datenbank, eine Peer-to-Peer Applikation, ein verteiltes Speicherverwaltungssystem, eine Blockkette (engl. Blockchain), ein distributed Ledger, ein verteiltes Speichersystem, ein distributed ledger technology (DLT) based system (DLTS), ein revisionssicheres Datenbanksystem, eine Cloud, ein Cloud-Service, eine Blockkette in einer Cloud oder eine Peer-to-Peer Datenbank verstanden werden. Beispielsweise kann eine Netzwerk-Applikation (oder auch als Netzwerkapplikation bezeichnet) ein verteiltes Datenbanksystem sein, das z. B. mittels einer Blockkette (z. B. Hyperledger) oder einem distributed ledger realisiert ist. Auch können beispielsweise unterschiedliche Konsensusverfahren (engl. consensus algorithms) implementiert werden.

Bei einem verteilten Datenbanksystem oder bei der Netzwerk-Applikation kann es sich beispielsweise auch um ein verteiltes Kommunikationssystem zum Datenaustausch handeln. Dies kann beispielsweise ein Netzwerk oder ein Peer-to-Peer Netzwerk sein.

Bei einer "Netzwerk-Applikation" kann es sich beispielsweise auch um eine Netzwerk-Applikationsinfrastruktur handeln oder die Netzwerk-Applikation umfasst eine entsprechende Netzwerk-Applikationsinfrastruktur. Diese Infrastruktur kann beispielsweise Knoten und/oder Kommunikationsnetze und/oder Datenschnittstelle und/oder weitere Komponenten umfassen, um die Netzwerk-Applikation zu realisieren oder auszuführen. Bei der Netzwerk-Applikation kann es sich z. B. um eine verteilte Netzwerk-Applikation (z. B. eine verteilte Peer-to-Peer Applikation oder ein verteiltes Datenbanksystem) handeln, die beispielsweise auf mehreren Knoten der Netzwerk-Applikationsinfrastruktur ausgeführt wird.

Unter "Datenblock", der insbesondere je nach Kontext und Realisierung auch als "Glied" oder "Block" bezeichnet sein kann, kann im Zusammenhang mit der Erfindung beispielsweise ein Datenblock eines verteilten Datenbanksystems (z. B. eine Blocckette oder eine Peer to Peer Datenbank) oder einer Netzwerk-Applikation verstanden werden, die insbesondere als Datenstruktur realisiert ist und vorzugsweise jeweils eine der Transaktionen oder mehrere der Transaktionen umfasst. Bei einer Implementierung kann beispielsweise die Datenbank (oder das Datenbanksystem) ein DLT basiertes System (DLTS) oder eine Blockkette sein und ein Datenblock ein Block der Blockkette oder des DLTS.

Unter einem "Blockketten-Knoten", "Knoten", "Knoten eines verteilten Datenbanksystems oder einer Netzwerk-Applikation" und dergleichen, können im Zusammenhang mit der Erfindung beispielsweise Geräte (z. B. Feldgeräte, Mobiltelefone), Rechner, Smartphones, Clients oder Teilnehmer verstanden werden, die Operationen (mit) dem verteilten Datenbanksystem (z. B. eine Blockkette) durchführen. Solche Knoten können beispielsweise Transaktionen einer Netzwerk-Applikation oder eines verteilten Datenbanksystems bzw. deren Datenblöcke ausführen oder neue Datenblöcke mit neuen Transaktionen in das verteilte Datenbanksystem (oder in die Netzwerk-Applikation) mittels neuer Datenblöcke einfügen bzw. verketten.

Bei einem "Gerät" handelt es sich beispielsweise um ein Gerät eines technischen Systems und/oder industriellen Anlage und/oder eines Automatisierungsnetzes und/oder einer Fertigungsanlage, wie z.B. eine Maschine oder ein Roboter. Ein Gerät kann insbesondere auch ein Knoten des verteilten Datenbanksystems (oder der Netzwerk-Applikation) sein. Außerdem können die Geräte beispielsweise Feldgeräte sein oder Geräte im Internet der Dinge sein.

Unter einem "individuellen Merkmal" (oder z. B. nur als Merkmal bezeichnet) kann im Zusammenhang mit der Erfindung beispielsweise ein Merkmal (z. B. in Form von Daten) verstanden werden, das nicht reproduzierbar ist, wie z.B. eine Gerätenummer/Identifikationsnummer. Ein individuelles Merkmal umfasst insbesondere messbare, physikalische Geräteeigenschaften. Messbare, physikalische Geräteeigenschaften sind beispielsweise Maße, Oberflächen, Oberflächenstruktur, Rauschverhalten, Geräusche, Strahlungseigenschaften/Strahlungscharakteristik, etc. des Geräts. Beispielsweise kann ein solches Merkmal durch einen Sensor erfasst werden. Das Merkmal kann demnach beispielsweise einer physikalischen Größe entsprechen, wie z. B. eine Wellenlänge des Lichtes. Das individuelle Merkmal entspricht beispielsweise Daten einer einmaligen Kombination aus einen Folge von Einsen und Nullen (digitaler Fingerabdruck oder eine Art Unique Identifier) in Form von binärcodierten Daten, die z. B. einem entsprechenden Gerät fest zugeordnet werden können. Bei dem individuellen Merkmal kann es sich beispielsweise um ein Oberflächenmerkmal (z. B. Kratzer, Oberflächenunebenheiten) des Geräts handeln. Alternativ oder zusätzlich kann es sich bei dem individuellen Merkmal zum Beispiel um spektroskopische Daten (die z. B. auch als spektrale Daten bezeichnet werden können) über das Gerät handeln (z. B. gemessene Spektren, hyperspektrale Bilder). Bei dem individuellen Merkmal kann es sich beispielsweise auch um ein Merkmal handeln, das z. B. von dem Gerät nicht entfernbar ist, ohne das Gerät und/oder das Merkmal selbst dabei zu beschädigen oder zu verändern. Entsprechende Merkmale können beispielsweise als intrinsische individuelle Merkmale des Objektes bezeichnet werden.

Beispielsweise kann ein individuelles Merkmal auch ein Rauschsignal sein, das z. B. durch ein Erfassungsgerät (z. B. ein Oszilloskop) erfasst wird. Handelt es sich bei dem Gerät beispielsweise um ein elektronisches Bauteil, so kann beispielsweise über eine Schnittstelle des Geräts ein gerätespezifisches Rauschsignal oder ein gerätespezifisches Signal (z. B. ein Signalgeber, der ein unveränderbares spezifisches Signal erzeugt, das beispielsweise einmalig konfigurierbar ist) erfasst werden. Bei diesem Rauschsignal können beispielsweise Amplitude des Raussignals für bestimmte Widerstände und/oder Dämpfungen erfasst und/oder berücksichtigt werden. Auch kann beispielsweise ein vorgegebenes Testsignal durch das Gerät bereitgestellt werden und hierbei ggf. Signalverzerrungen für die individuellen Merkmale berücksichtigt werden. Alternativ oder zusätzlich kann beispielsweise das Erfassungsgerät ein Testsignal senden, das z. B. durch vorgegebene Schaltkreise des Geräts übertragen/gesendet wird. Beispielsweise erzeugt das Gerät bzw. die entsprechenden Schaltkreise des Geräts eine Antwort, die z. B. das Testsignal umfasst, wobei die Antwort an das Erfassungsgerät übermittelt wird. Es wird dann beispielsweise der individuelle Einfluss der Schaltkreise auf das Testsignal durch das Erfassungsgerät als individuelles Merkmal erfasst. Dieser individuelle Einfluss kann beispielsweise eine Verzerrung des Testsignals sein.

Auch kann es sich beispielsweise bei dem individuellen Merkmal um ein akustisches Merkmal des Geräts handeln (z. B. Motorengeräusche, Betriebsgeräusche), das beispielsweise durch Schwingungen oder Vibrationen des Geräts verursacht wird.

Damit beispielsweise ein Erfassungsgerät/ein Sensor das individuelle Merkmal möglichst einfach erfassen kann, kann die Art und Weise und der Ort (z. B. kann als Konfiguration bezeichnet werden) am Gerät beispielsweise durch einen Gerätedatensatz vorgegeben werden. Dieser Gerätedatensatz kann beispielsweise durch die Netzwerkapplikation oder eine Datenbank (z. B. einem verteilten Datenbanksystem) bereitgestellt werden oder dieser Gerätedatensatz ist dem Gerät mittels eines mit dem Gerät gekoppelten Datenspeichers für das Erfassungsmodul oder für das Erfassungsgerät abrufbar. Das Gerät kann beispielsweise auch den Datenspeicher umfassen. Der Gerätedatensatz kann dabei beispielsweise Informationen umfassen, welche Art von Messung (z. B. optisch, spektral, akustisch, elektrisch, optoakustisch, multispektral optoakustisch), mit welcher Art von Sensor (z. B. Mikrofon, Ultraschallsensor, Infraschallsensor, spektrale Messsysteme, optoakustische Messsysteme, optoakustische Messsysteme), an welchem Ort, über welchen Zeitraum und mit welchen Messparametern (z. B. Dämpfung; Signalfilter wie Hochpass, Tiefpass, Bandpass, Frequenzen, Wellenlängen) durchzuführen ist, um das individuelle Merkmal zu erfassen.

Insbesondere können beim Erfassen und/oder Auswerten und/oder Vergleichen und/oder Prüfen und/oder Verarbeiten der individuellen Merkmale Toleranzwerte berücksichtigt werden, um z. B. Messtoleranzen oder Messungenauigkeiten, z. B. des Erfassungsgerätes, auszugleichen.

Unter einem "Identifikator" kann im Zusammenhang mit der Erfindung beispielsweise eine aus dem individuellen Merkmal ableitbare Charakteristik verstanden werden. Insbesondere ist der Identifikator derart gestaltet, dass für zwei gleiche individuelle Merkmale ein eindeutiger Identifikator reproduzierbar/generierbar ist. Insbesondere können hierbei Toleranzwerte berücksichtigt werden, um z. B. Messtoleranzen oder Messungenauigkeiten des Erfassungsgerätes auszugleichen. Beim Identifikator handelt es sich beispielsweise um einen digitalen Fingerabdruck für das Gerät. Der digitale Fingerabdruck wird beispielsweise mittels eines Algorithmus für digitale Fingerabdrücke (z. B. Rabin's fingerprinting algorithm) berechnet. Handelt es sich bei dem individuellen Merkmal beispielsweise um ein Signal oder Rauschsignal, so können das Signal/Rauschverhältnis, Phase des Signals, Frequenzen, Wellenlängeninformationen, Frequenzamplituden verwendet werden, um den Identifikator abzuleiten oder zu generieren.

Bevor beispielsweise der Identifikator für ein entsprechendes individuelles Merkmal berechnet wird, kann z. B. das individuelle Merkmal vorverarbeitet werden, um die Messungenauigkeiten zu kompensieren. Das entsprechende vorverarbeitete individuelle Merkmal kann dann z. B. als Eingabeparameter für einen Algorithmus zum Berechnen des Identifikators/des digitalen Fingerabdruckes verwendet werden.

Unter einem "gerätespezifischen Referenzwert" kann im Zusammenhang mit der Erfindung insbesondere ein Datensatz oder eine Datenstruktur verstanden werden, der/die Informationen zu einem individuellen Merkmal eines Geräts speichert. Der gerätespezifische Referenzwert ist insbesondere dem Gerät zugeordnet. Somit kann sich der gerätespezifische Referenzwert auf messbare, physikalische Geräteeigenschaften des Geräts beziehen. Insbesondere kann ein jeweiliges Gerät über den gerätespezifischen Referenzwert bei der Netzwerkapplikation registriert werden.

Es ist ein Vorteil der vorliegenden Erfindung, die Sicherheit und Vertraulichkeit von Daten eines Geräts und/oder des Geräts selbst zu schützen. Beispielsweise kann ein Servicetechniker lediglich dann auf ein Gerät zugreifen, wenn durch die erfindungsgemäße Vorrichtung der Zugriff auf das Gerät freigegeben wird. Dazu erfolgt vorab eine Prüfung von mindestens einem individuellen Merkmal des Geräts. Dieses ist vorzugsweise so gewählt, dass sich damit das Gerät eindeutig identifizieren lässt. So kann auch ein unautorisierter Zugriff auf das Gerät oder ein Manipulationsversuch auf einfach Weise erkannt werden.

Weiter ist es ein Vorteil der vorliegenden Erfindung, dass ein Gerät individuell identifizierbar ist und nur bei einem erfolgreichen Abgleich des entsprechenden gerätespezifischen Identifikators auf das Gerät zugegriffen werden kann. Somit wird eine manipulationsgeschützte Authentisierung und/oder manipulationsgeschützte Buchführung über die Zugriffe auf das Gerät ermöglicht. Beispielsweise können somit Wartungsarbeiten am Gerät zurückverfolgt bzw. nachträglich überprüft/kontrolliert werden. Auch sind falsche und/oder nicht (korrekt) durchgeführte Zugriffe auf das Gerät, wie z.B. Wartungsarbeiten, identifizierbar und/oder nachvollziehbar. Darüber hinaus erlaubt die vorliegende Erfindung Produktkopien oder manipulierte/modifizierte Geräte zu identifizieren, wenn beispielsweise kein gerätespezifischen Referenzwert für ein spezifisches Gerät in der Netzwerkapplikation gespeichert ist. Ferner kann die Erfindung eine Synchronisation von Daten des physikalischen Geräts und eines Digitalen Zwillings ermöglichen.

In einer Ausführungsform der Vorrichtung kann die Schnittstelle weiter eingerichtet sein, in Abhängigkeit des Prüfergebnisses einen in der Netzwerkapplikation gespeicherten Programmbefehl, der mindestens eine gerätespezifische Zugriffsberechtigungsinformation, die einen Zugriff auf das Gerät betrifft, umfasst, einzulesen.

Unter einer "gerätespezifischen Zugriffsberechtigung" kann beispielsweise eine vorgegebene Regel verstanden werden, die einen Zeitraum, Zeitpunkt, Ort und/oder Zugriffstyp (z.B. Service-Typ) regelt. So kann die gerätespezifischen Zugriffsberechtigung einen Zugriff zusätzlich beschränken. Dies erlaubt beispielsweise den Zugriff auf das Gerät granular zu gestalten. Die gerätespezifischen Zugriffsberechtigung kann beispielsweise in einem Smart Contract gespeichert sein.

In einer Ausführungsform der Vorrichtung kann das Steuermodul weiter eingerichtet sein, den Programmbefehl auszuführen, wobei der Zugriff auf das Gerät zusätzlich in Abhängigkeit der gerätespezifischen Zugriffsberechtigungsinformation autorisiert wird.

Die Prüfung der gerätespezifischen Zugriffsberechtigung kann insbesondere über einen Smart Contract erfolgen. Alternativ oder zusätzlich kann die gerätespezifischen Zugriffsberechtigung auch durch das Prüfmodul geprüft werden.

In einer Ausführungsform kann der gerätespezifische Referenzwert dem Gerät und/oder einem auf das Gerät zugreifenden Vorrichtung oder einem auf das Gerät zugreifenden Nutzer eindeutig zugeordnet sein.

In einer Ausführungsform kann der Zugriff auf das Gerät ein physikalischer Zugriff und/oder ein logischer Zugriff durch eine auf das Gerät zugreifenden Vorrichtung oder einem auf das Gerät zugreifenden Nutzer sein.

Ein Zugriff kann insbesondere durch Hardware und/oder Software erfolgen. Beispielsweise können bei Wartungsarbeiten physikalische Veränderungen an dem Gerät und/oder Software-Updates eingespielt werden.

In einer Ausführungsform der Vorrichtung kann das Steuermodul weiter eingerichtet sein, eine Beendigung und/oder einen Abbruch des Zugriffs auf das Gerät zu erfassen und als erste Zugriffsinformation bereitzustellen.

Damit kann beispielsweise erfasst und somit auch nachverfolgt werden, zu welchem Zeitpunkt und/oder für welchen Zeitraum ein Zugriff auf ein Gerät freigegeben war.

In einer Ausführungsform der Vorrichtung kann das Steuermodul weiter eingerichtet sein, einen nicht-autorisierten Zugriff auf das Gerät in Abhängigkeit des Prüfergebnisses zu erfassen und als zweite Zugriffsinformation bereitzustellen.

Beispielsweise kann bei einem negativen Prüfergebnis, d.h. wenn der Identifikator nicht mit dem hinterlegten gerätspezifischen Referenzwert übereinstimmt, auch eine Warnung ausgegeben werden.

In einer Ausführungsform der Vorrichtung kann das Steuermodul weiter eingerichtet sein, ein Zugriffsprotokoll in Abhängigkeit der Zugriffsberechtigungsinformation und/oder der ersten Zugriffsinformation und/oder der zweiten Zugriffsinformation zu erfassen und bereitzustellen.

So kann der Zugriff auf das Gerät, insbesondere über die Zeit, überwacht und in dem Zugriffsprotokoll gespeichert werden. Dies erlaubt beispielsweise eine Kontrolle und/oder Überwachung der autorisierten Zugriffe auf das Gerät.

In einer Ausführungsform der Vorrichtung kann die Schnittstelle weiter eingerichtet sein, die erste Zugriffsinformation und/oder die zweite Zugriffsinformation und/oder das Zugriffsprotokoll in der Netzwerkapplikation zu speichern.

Beispielsweise können die erste Zugriffsinformation und/oder die zweite Zugriffsinformation und/oder das Zugriffsprotokoll als Datenblock oder Transaktion in die Netzwerkapplikation/in eine verteilte Datenbank eingefügt werden. Somit können diese Zugriffsinformationen kryptographisch geschützt und/oder manipulationsgeschützt gespeichert werden.

In einer Ausführungsform kann das individuelle Merkmal gegen Manipulation gesichert sein.

Beispielsweise ist das individuelle Merkmal versteckt angebracht und/oder durch ein komplexes Verfahren auf dem Gerät aufgebracht, das eine Reproduktion und/oder Modifikation des individuellen Merkmals verhindert. Alternativ oder zusätzlich kann das individuelle Merkmal auch durch einen weiteren Sicherungsmechanismus, wie z.B. eine Schutzvorrichtung, manipulationsgeschützt gesichert werden.

In einer Ausführungsform kann die Netzwerkapplikation als eine dezentrale, verteilte Datenbank oder als ein Distributed Ledger realisiert sein.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, die Schritte eines erfindungsgemäßen Verfahrens auszuführen.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Ausführungsbeispiele der Erfindung sind in den Zeichnungen beispielhaft dargestellt und werden anhand der nachfolgenden Beschreibung näher erläutert. Es zeigen:
- Fig. 1:: ein Ausführungsbeispiel der erfindungsgemäßen Vorrichtung; und
- Fig. 2:: ein Ausführungsbeispiel des erfindungsgemäßen Verfahrens.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

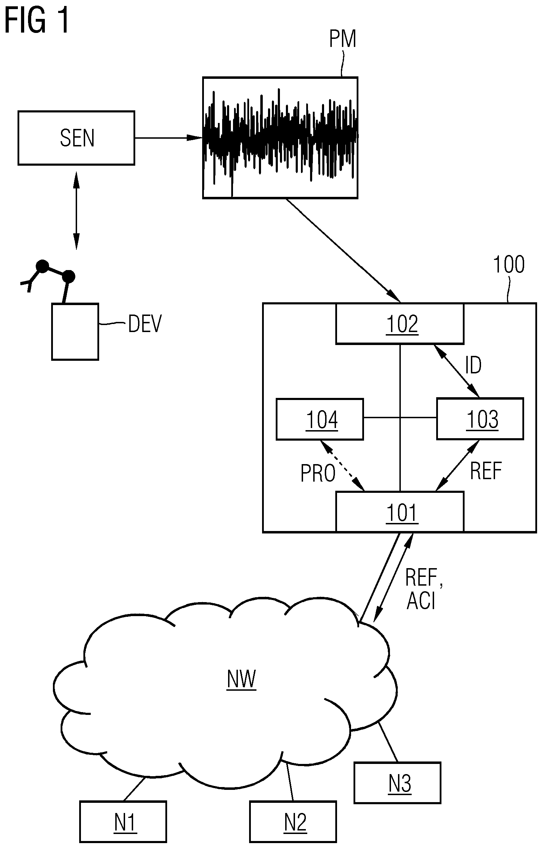

Figur 1 zeigt ein Ausführungsbeispiel der Erfindung. Es ist eine Vorrichtung 100 zur Zugriffssteuerung auf ein Gerät DEV gezeigt. Die Vorrichtung 100 kann insbesondere in Hardware und/oder Software ausgestaltet sein und mindestens einen Prozessor umfassen. Das Gerät DEV kann beispielsweise ein Gerät in einer industriellen Anlage/Fertigung sein, wie z.B. ein Roboter.

Die Vorrichtung 100 umfasst eine Schnittstelle 101, ein Erfassungsmodul 102, ein Prüfmodul 103 und ein Steuermodul 104. Diese Module sind vorzugsweise untereinander gekoppelt, so dass sie Daten/Informationen austauschen können.

Die Schnittstelle 101 ist derart eingerichtet, die Vorrichtung 100 mit einer Netzwerkapplikation NW zu koppeln. Die Vorrichtung kann insbesondere auch ein Knoten der Netzwerk-applikation NW sein, wobei über die Schnittstelle Daten mit der Netzwerkapplikation NW ausgetauscht werden können.

Eine Netzwerkapplikation NW kann beispielsweise ein verteiltes, dezentrales Datenbanksystem, eine Blockchain/Distributed Ledger oder eine Cloud-Anwendung sein. Im Folgenden wird in diesem Ausführungsbeispiel eine verteilte, dezentrale Datenbank betrachtet, die eine Mehrzahl von Knoten N1, N2, N3 aufweist, wobei die Vorrichtung 100 selbst auch ein Knoten der verteilten Datenbank sein kann. Die Schnittstelle 101 ist weiter eingerichtet, Daten mit der verteilten Datenbank NW auszutauschen und einen in der verteilten Datenbank gespeicherten gerätespezifischen Referenzwert REF für das Gerät DEV einzulesen. Insbesondere ist die Schnittstelle 101 auch eingerichtet, Daten in das verteilte Datenbanksystem einzufügen.

Vorzugsweise sind eine Vielzahl von gerätespezifischen Referenzwerten für eine Vielzahl von Geräten in der verteilten Datenbank gespeichert. Ein jeweiliger gerätespezifischer Referenzwert ist einem jeweiligen Gerät und/oder einem auf das jeweilige Gerät zugreifenden Vorrichtung oder einem auf das jeweilige Gerät zugreifenden Nutzer eindeutig zugeordnet. Beispielsweise kann der gerätespezifische Referenzwert REF für das Gerät DEV durch die Vorrichtung 100 angefordert/abgerufen/ausgelesen werden. Dies kann beispielsweise durch eine Geräteinformation oder einen Gerätedatensatz, die/der dem Gerät DEV zugeordnet ist, erfolgen.

Vorzugsweise ist der gerätespezifische Referenzwert REF dem Gerät DEV bzw. einem individuellen Merkmal PM des Geräts DEV zugeordnet. In anderen Worten, der gerätespezifische Referenzwert REF ist vorzugsweise derart vorgegeben, dass er einem Identifikator des Geräts DEV, der aus dem individuellen Merkmal PM ableitbar ist, entspricht.

Das Erfassungsmodul 102 ist derart eingerichtet, ein individuelles Merkmal PM des Geräts DEV zu erfassen. Das individuelle Merkmal PM umfasst messbare, physikalische Eigenschaften des Geräts. Vorzugsweise ist das individuelle Merkmal PM manipulationsgeschützt auf dem Gerät DEV aufgebracht oder in diesem integriert.

Beispielsweise kann es sich bei dem individuellen Merkmal PM um ein gerätespezifisches Frequenzspektrum handeln, welches sich beispielsweise durch Bestrahlung des Geräts mit einer bestimmten Wellenlänge ergibt. Alternativ kann es sich hierbei auch um ein Rauschspektrum oder um gerätespezifische Vibrationen handeln. Das individuelle Merkmal PM kann von einem Sensor SEN aufgenommen und an das Erfassungsmodul 102 übermittelt werden. Alternativ kann das Erfassungsmodul 102 selbst als Sensor, oder auch als Erfassungsvorrichtung oder Erfassungsgerät bezeichnet, ausgestaltet sein oder einen Sensor umfassen (nicht gezeigt). Das Erfassungsmodul 102 ist weiter ausgestaltet aus dem erfassten individuellen Merkmal PM einen Identifikator ID abzuleiten. Beispielsweise kann das Erfassungsmodul 102 einen Identifikator ID, wie z.B. einen digitalen Fingerabdruck, in Abhängigkeit des individuellen Merkmals PM generieren. Der Identifikator ID kann beispielsweise anhand von extrahierten Daten des Frequenzspektrums berechnet werden.

Der gerätespezifische Referenzwert REF und der Identifikator ID werden an das Prüfmodul 103 übermittelt. Das Prüfmodul 103 prüft den Identifikator ID anhand des gerätespezifischen Referenzwerts REF und gibt ein Prüfergebnis aus. Beispielsweise können der Identifikator ID und der gerätespezifischer Referenzwert REF miteinander verglichen werden. Wenn innerhalb eines vorgegebenen Toleranzbereichs eine Übereinstimmung vorliegt, wird ein positives Prüfergebnis ausgegeben. Wenn keine Übereinstimmung innerhalb eines vorgegebenen Toleranzbereichs vorliegt, wird ein negatives Prüfergebnis ausgegeben.

Alternativ oder zusätzlich kann eine solche Prüfung auch auf komplexere Berechnungen gestützt sein, wie z.B. eine Transformation des Werts Identifikator ID oder ein Hash-Wert des Identifikators, der dann mit dem entsprechend vorliegenden Referenzwert abgeglichen wird.

Das Prüfergebnis wird an das Steuermodul 104 übermittelt. Das Steuermodul 104 ist eingerichtet, einen Zugriff auf das Gerät DEV in Abhängigkeit des Prüfergebnisses zu autorisieren. Der Zugriff kann physikalisch oder logisch sein. Bei einem positiven Prüfergebnis kann ein Zugriff auf das Gerät freigegeben/erlaubt werden.

Weiter kann über die Schnittstelle 101 in Abhängigkeit des Prüfergebnisses, insbesondere bei einem positiven Prüfergebnis, ein in der verteilten Datenbank NW gespeicherter Programmbefehl eingelesen werden. Ein solcher Programmbefehl kann beispielsweise ein Smart Contract sein. Der Programmbefehl kann mindestens eine gerätespezifische Zugriffsberechtigungsinformation ACI, die einen Zugriff auf das Gerät betrifft, umfassen. Beispielsweise kann sich eine gerätespezifische Zugriffsberechtigungsinformation ACI auf einen Zugriffszeitraum für das Gerät DEV beziehen.

Das Steuermodul 104 kann dazu eingerichtet sein, den Programmbefehl auszuführen, so dass der Zugriff auf das Gerät DEV zusätzlich in Abhängigkeit der gerätespezifischen Zugriffsberechtigungsinformation DEV autorisiert wird.

Das Steuermodul 104 kann weiter dazu eingerichtet sein, eine Beendigung und/oder einen Abbruch des Zugriffs auf das Gerät zu erfassen und als erste Zugriffsinformation bereitzustellen. Demnach kann beispielsweise ein Log-Eintrag o.ä. über die Beendigung und/oder den Abbruch des Zugriffs erstellt werden.

Bei einem negativen Prüfergebnis wird der Zugriff nicht autorisiert. In diesem Fall kann durch das Steuermodul 104 eine zweite Zugriffsinformation in Abhängigkeit des negativen Prüfergebnisses bereitgestellt werden. Die zweite Zugriffsinformation kann beispielsweise das negative Prüfergebnis oder lediglich einen Verweis auf das negative Prüfergebnis umfassen.

Die erste und/oder zweite Zugriffsinformation kann insbesondere in die verteilte Datenbank NW eingefügt/gespeichert werden. Dies ermöglich beispielsweise eine zeitabhängige Kontrolle der Zugriffe auf das Gerät. Darüber hinaus kann auch bei einem positiven Prüfergebnis eine dritte Zugriffsinformation, z.B. in Form eines Log-Eintrags o.ä., bereitgestellt und/oder in die verteilte Datenbank eingefügt werden.

Insbesondere kann der Zugriff auf das Gerät DEV durch das Steuermodul 104 überwacht werden. Insbesondere kann dies zeitaufgelöst erfolgen. So kann in Abhängigkeit der gerätespezifischen Zugriffsberechtigungsinformation ACI und/oder der ersten Zugriffsinformation und/oder der zweiten Zugriffsinformation und/oder der dritten Zugriffsinformation ein Zugriffsprotokoll PRO erstellt werden. Das Zugriffsprotokoll PRO umfasst vorzugsweise einen Zeitverlauf der Zugriffe auf das Gerät DEV. Das Zugriffsprotokoll wird vorzugsweise als Datensatz oder Datenstruktur bereitgestellt. Das Zugriffsprotokoll PRO kann durch die Vorrichtung 100 beispielsweise in die verteilte Datenbank eingefügt werden.

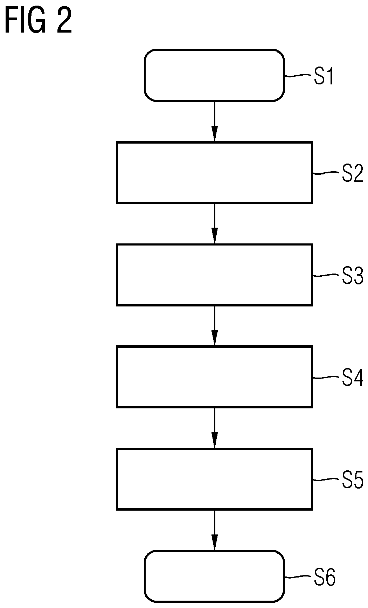

Figur 2 zeigt ein weiteres Ausführungsbeispiel der Erfindung. Es ist ein Ausführungsbeispiel des erfindungsgemäßen Verfahrens zur Zugriffssteuerung auf ein Gerät als Flussdiagramm gezeigt.

Das erfindungsgemäße Verfahren kann insbesondere von einer Vorrichtung gemäß der Erfindung, wie beispielhaft anhand Figur 1 gezeigt, realisiert werden. Insbesondere kann das erfindungsgemäße Verfahren zumindest teilweise computerimplementiert sein, d.h. Schritte des Verfahrens können durch einen Prozessor ausgeführt werden.

Im ersten Schritt S1 des Verfahrens wird ein in einer Netzwerkapplikation gespeicherter gerätespezifischer Referenzwert eingelesen. Der gerätespezifische Referenzwert ist dem Gerät, auf das Zugriff gewährt werden soll, zugeordnet.

Im nächsten Schritt S2 wird ein individuelles Merkmal des Geräts erfasst, wobei das individuelle Merkmal messbare, physikalische Geräteeigenschaften des Geräts umfasst. Vorzugsweise ist eine Merkmalserfassungsinformation, wie z.B. ein Ort des individuellen Merkmals an dem Gerät und/oder ein Typ einer Messung, vorgegeben, um die Messung/Erfassung des individuellen Merkmals durchzuführen. Beispielsweise kann anhand des gerätespezifischen Referenzwerts oder bereitgestellten Gerätedaten eine solche Merkmalserfassungsinformation abgeleitet oder ermittelt werden.

Schritt S1 und S2 können insbesondere alternativ auch in umgekehrter Reihenfolge oder parallel ablaufen.

Im nächsten Schritt S3 wird ein Identifikator aus dem individuellen Merkmal abgeleitet. Beispielsweise wird der Identifikator in Abhängigkeit von Messdaten eines Sensors, der das individuelle Merkmal erfasst, generiert.

Im nächsten Schritt S4 wird der Identifikator anhand des gerätespezifischen Referenzwerts geprüft. Insbesondere wird der Identifikator mit dem gerätespezifischen Referenzwert verglichen.

Im nächsten Schritt S5 wird ein Prüfergebnis dieser Prüfung ausgegeben.

Im nächsten Schritt S6 wird ein Zugriff auf das Gerät in Abhängigkeit des Prüfergebnisses autorisiert. So kann bei einem positiven Prüfergebnis der Zugriff auf das Gerät gewährt werden. Bei einem negativen Prüfergebnis, z.B. bei fehlender oder unzureichender Übereinstimmung des Identifikators und des gerätespezifischen Referenzwerts, wird ein Zugriff abgebrochen/unterbunden/nicht freigegeben. Alternativ kann bei einem negativen Prüfergebnis eine erneute Erfassung des individuellen Merkmals und anschließende Prüfung anhand des Referenzwerts angestoßen werden. So kann beispielsweise der Zugriff auf das Gerät erst nach einer vorgegebenen Anzahl von fehlgeschlagenen Autorisierungsversuchen unterbunden werden.

Bei erfolgreicher Autorisierung wird der Zugriff, wie z.B. ein logischer und/oder physischer Zugriff, auf das Gerät freigegeben. Das Verfahren stellt demnach sicher, dass das Gerät korrekt anhand eines individuellen Merkmals identifiziert wird und lediglich bei korrekter Identifizierung ein Zugriff auf das Gerät autorisiert wird.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Vorrichtung (100) zur Zugriffssteuerung auf ein Gerät (DEV), umfassend:
- eine Schnittstelle (101), die derart eingerichtet ist, die Vorrichtung (100) mit einer Netzwerkapplikation (NW) zu koppeln, um Daten mit der Netzwerkapplikation auszutauschen und einen in der Netzwerkapplikation gespeicherten gerätespezifischen Referenzwert (REF) einzulesen,
- ein Erfassungsmodul (102), das derart eingerichtet ist, ein individuelles Merkmal (PM) des Geräts zu erfassen, wobei das individuelle Merkmal des Geräts messbare, physikalische Geräteeigenschaften umfasst, und daraus einen Identifikator (ID) abzuleiten,
- ein Prüfmodul (103), das derart eingerichtet ist, den Identifikator (ID) anhand des gerätespezifischen Referenzwerts (REF) zu prüfen und ein Prüfergebnis auszugeben,
und
- ein Steuermodul (104), das derart eingerichtet ist, einen Zugriff auf das Gerät in Abhängigkeit des Prüfergebnisses zu autorisieren.

2. Vorrichtung nach Anspruch 1, wobei die Schnittstelle (101) weiter eingerichtet ist in Abhängigkeit des Prüfergebnisses einen in der Netzwerkapplikation gespeicherten Programmbefehl, der mindestens eine gerätespezifische Zugriffsberechtigungsinformation (ACI), die einen Zugriff auf das Gerät betrifft, umfasst, einzulesen.

3. Vorrichtung nach Anspruch 2, wobei das Steuermodul (104) weiter eingerichtet ist, den Programmbefehl auszuführen, wobei der Zugriff auf das Gerät zusätzlich in Abhängigkeit der gerätespezifischen Zugriffsberechtigungsinformation autorisiert wird.

4. Vorrichtung nach einem der vorhergehenden Ansprüche, wobei der gerätespezifische Referenzwert (REF) dem Gerät und/oder einem auf das Gerät zugreifenden Vorrichtung oder einem auf das Gerät zugreifenden Nutzer eindeutig zugeordnet ist.

5. Vorrichtung nach einem der vorhergehenden Ansprüche, wobei der Zugriff auf das Gerät ein physikalischer Zugriff und/oder ein logischer Zugriff durch eine auf das Gerät zugreifenden Vorrichtung oder einem auf das Gerät zugreifenden Nutzer ist.

6. Vorrichtung nach einem der vorhergehenden Ansprüche, wobei das Steuermodul (104) weiter eingerichtet ist, eine Beendigung und/oder einen Abbruch des Zugriffs auf das Gerät zu erfassen und als erste Zugriffsinformation bereitzustellen.

7. Vorrichtung nach einem der vorhergehenden Ansprüche, wobei das Steuermodul (104) weiter eingerichtet ist, einen nicht-autorisierten Zugriff auf das Gerät in Abhängigkeit des Prüfergebnisses zu erfassen und als zweite Zugriffsinformation bereitzustellen.

8. Vorrichtung nach einem der vorhergehenden Ansprüche, wobei das Steuermodul (104) weiter eingerichtet ist, ein Zugriffsprotokoll (PRO) in Abhängigkeit der gerätespezifischen Zugriffsberechtigungsinformation (ACI) und/oder der ersten Zugriffsinformation und/oder der zweiten Zugriffsinformation zu erfassen und bereitzustellen.

9. Vorrichtung nach einem der vorhergehenden Ansprüche, wobei die Schnittstelle weiter eingerichtet ist, die erste Zugriffsinformation und/oder die zweite Zugriffsinformation und/oder das Zugriffsprotokoll in der Netzwerkapplikation zu speichern.

10. Vorrichtung nach einem der vorhergehenden Ansprüche, wobei das individuelle Merkmal (PM) gegen Manipulation gesichert ist.

11. Vorrichtung nach einem der vorhergehenden Ansprüche, wobei die Netzwerkapplikation als eine dezentrale, verteilte Datenbank oder als ein Distributed Ledger realisiert ist.

12. Verfahren zur Zugriffssteuerung auf ein Gerät, umfassend die Verfahrensschritte:
- Einlesen (S1) eines in einer Netzwerkapplikation gespeicherten gerätespezifischen Referenzwerts,
- Erfassen (S2) eines individuellen Merkmals des Geräts, wobei das individuelle Merkmal des Geräts messbare, physikalische Geräteeigenschaften umfasst,
- Ableiten (S3) eines Identifikators aus dem individuellen Merkmal,
- Prüfen (S4) des Identifikators anhand des eingelesenen gerätespezifischen Referenzwerts,
- Ausgeben (S5) des Prüfergebnisses,
und
- Autorisieren (S6) eines Zugriffes auf das Gerät in Abhängigkeit des Prüfergebnisses.

13. Computerprogrammprodukt, das direkt in einen programmierbaren Computer ladbar ist, umfassend Programmcodeteile, die dazu geeignet sind, die Schritte des Verfahrens nach Anspruch 12 durchzuführen.
